# EUROPEAN PATENT APPLICATION

(11) **EP 3 836 528 A1**
(43) Date of publication of application: **16.06.2021**
(21) Application number: 19275146.9
(22) Date of filing: 10.12.2019
(51) Int. Cl.: H04N 5/225, H04N 5/33, H04N 5/235, H04N 5/04

(54) **NIGHT VISION DEVICE AND METHOD**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A system comprises a night vision device and a switching circuitry. The switching circuitry is configured to switch the night vision device at a first period and a first duty cycle to synchronise the switching of the night vision device with a second period of a lighting system. The lighting system is in the vicinity of the night vision device. The night vision device and lighting system are configured to be synchronised such that the lighting system is inactive at the time when the night vision device is active.

## Description

### BACKGROUND

Night vision devices (NVS), such as night vision googles or cameras are used to allow a user to see their surroundings when the level of visible light is too low. However, in scenarios where a NVS is used with artificial lighting, the NVS should be adapted to mitigate any negative effects caused by the artificial lighting.

### BRIEF DESCRIPTION OF DRAWINGS

Figure 1 is a graph illustrating night vision device sensitivity and compatibility filter sensitivity.
Figure 2 illustrates a night vision device according to some examples.
Figure 3 illustrates a vehicle comprising a night vision device according to some examples.
Figure 4 illustrates a synchronisation scheme of lighting and a night vision device according to some examples.
Figure 5 illustrates a further synchronisation scheme of lighting and a night vision device according to some examples.
Figure 6 illustrates a switching method according to some examples.
Figure 7 illustrates a computer readable medium according to some examples.

### DETAILED DESCRIPTION

Night vision systems (NVS), which may also be known as night vision devices or goggles, may allow a user to see their surroundings when the level of natural visible light is too low. There is sometimes the desire to light an area where the user is operating the NVS using artificial visible lighting. If the NVS is not adapted to mitigate for the artificial light then the image the user sees may be degraded. For example, spots of high intensity may obscure detail in the image. The degradation is at least due to the fact that NVS may use non-visible light to form the image but are also sensitive to at least a portion of the visible light spectrum.

In order to mitigate against the degradation of the image, compatibility filters may be used with the NVS which filter out at least a portion of the visible light spectrum from the NVS. However, this use of compatibility filters may mean that approximately 30-50% of the NVS sensitivity is wasted. This is because light that could have been sensed by the NVS (from sources other than the artificial lighting) is not detected by the NVS as it has been attenuated by the filter.

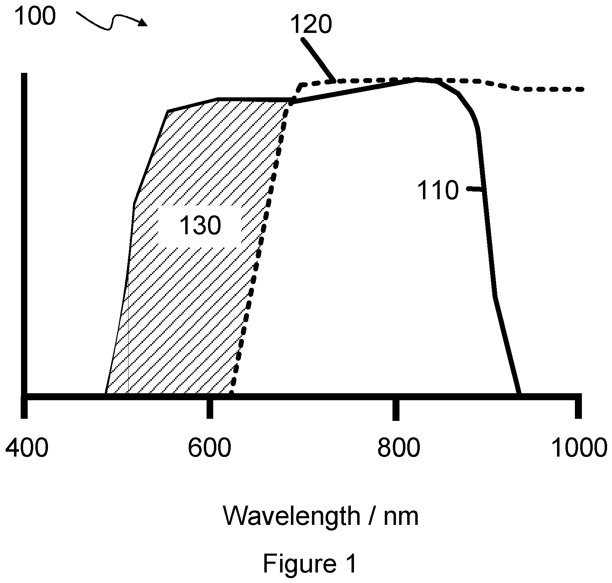

This is illustrated by Figure 1. Figure 1 shows a plot 100 of a typical sensitivity 110 of a NVS and a typical filter spectrum transmission 120. As can be seen in plot 100 an area 130 is wasted due to the filter which results in a lower resultant sensitivity than is possible with the NVS.

A method to reduce this reduction in sensitivity may be to use switching or gating of the NVS to synchronise with switching of the lighting system. NVS may be gated with very fast response times, in the range of nano seconds and this may be synchronised with the lighting system such that the lighting system is off or inactive when the NVS is active or on.

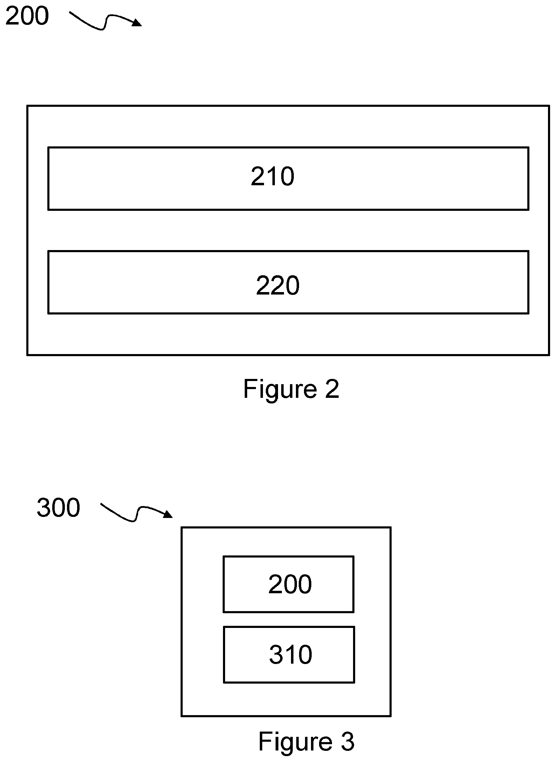

Figure 2 illustrates a system 200 according to some examples. System 200 comprises switching circuity 210 and switched night vison system 220. Switching circuity 210 is configured to switch the switched night vision device 220 with a first period and a first duty cycle to synchronise the switching of the switched night vision device with a second period of a lighting system in the vicinity of the switched night vision device 220. The night vision device and lighting system are configured to be synchronised such that the lighting system is inactive at the time when the night vision device is active. This means that the lighting system may illuminate the vicinity around the switched night vision device 220 without the use of any filters placed over the switched night vision device. This enables the switched night vision device 220 to operate with a greater resultant sensitivity.

In some examples the switched night vision device 220 may comprise a night vision eyepiece, night vision googles or a night vision camera.

Figure 3 illustrates a vehicle 300 comprising a system 200 as described in relation to Figure 1. Vehicle 300 also comprises switched lighting system 310, similar to the lighting system as described in relation to Figure 2. The vehicle may be an aircraft, or any other type of vehicle. A switched night vision device 220 as described with relation to Figure 1 may be located in a cockpit of the aircraft. The lighting system may illuminate an area of the vehicle. Alternatively or additionally the lighting system may illuminate controls or interfaces of the vehicle, such as lights to indicate status of systems in the vehicle.

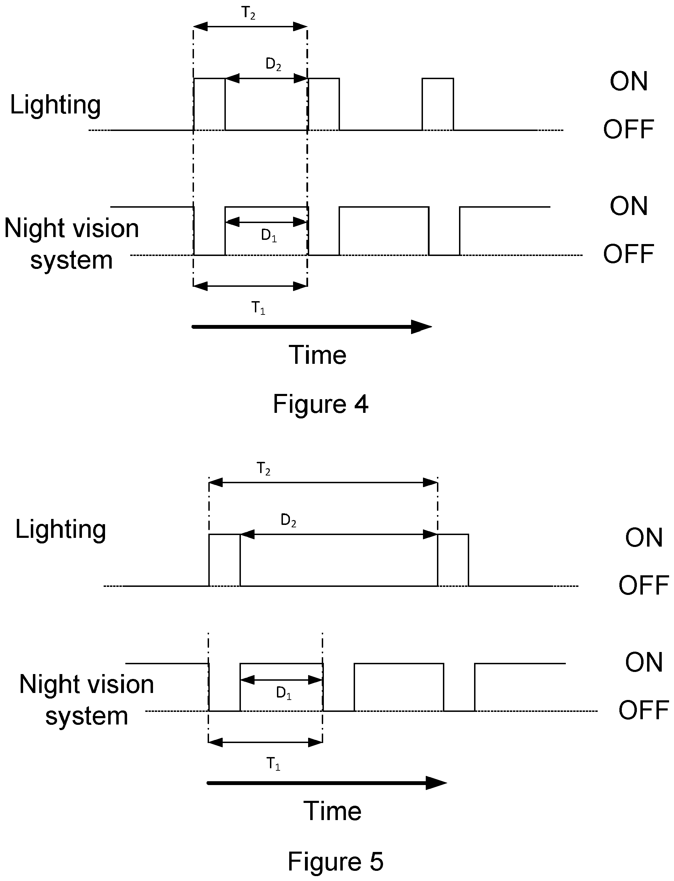

Figures 4 and 5 illustrate how the switching performed by switching circuitry 210 may function. Figure 4 illustrates a scenario where the first period T₁ and the second period T₂ are substantially equal. As can be seen from Figure 4, the time for which the switched night vision device 220 is inactive coincides with the time that the lighting system is active. In the example of Figure 4 the time for which the lighting system is inactive D₂ coincides with the time for which the switched night vision device 220 is inactive D₁.

Although not illustrated in Figure 4, it is possible that the lighting system may be inactive for a shorter time than the night vision device is inactive. This may provide a guard period, which at least may reduce the impact of reflections of the lighting system being received by the switched night vision device 220 when it is active. There may be a guard period both before the lighting system activates and after the lighting system activates. The guard periods may be substantially equal, or may be different. In some examples the guard period prior to the lighting system turning activating may be shorter than the guard period after the lighting system activating.

As illustrated by Figure 5, the first period T₁ may be shorter than the second period T₂. In this example the second period T₂ is double the first period T₁ such that the lighting system is active when the switched night vision device 220 is active, and the switched night vision device 220 may also be inactive when the lighting system is also inactive.

In some examples the first period T₁ may be approximately 10 ms, and the first duty cycle may be 90% such that the night vision device is active for 9 ms. In some examples the first period may be within the range of 1 ms to 100 ms and the first duty cycle may be within the range of 70 % to 99 %, although the first period and duty cycles are not limited to these ranges, and the first period and duty cycle may depend upon the specific application. The time periods may also be selected based on whether the user could perceive the flickering of the lights, and so must be high frequency such that this is not noticeable by the user. Furthermore, the NVS should be switched off for a short enough period that is also not perceivable by a user.

In some examples the second duty cycle may be equal to approximately equal to 100 % minus the first duty cycle. In some examples the second duty cycle may be less than 100 % minus the first duty cycle.

The system 200 may also comprise means to obtain the frequency of the switching of the lighting system and means to adapt the frequency of the switched night vision device 220 to match the switching of the night vision device. This may avoid the scenario in Figure 5 where the switched night vision device 220 may be unnecessarily inactive. The means to obtain the frequency of the switching of the lighting system may comprise a sensing system to sense the frequency.

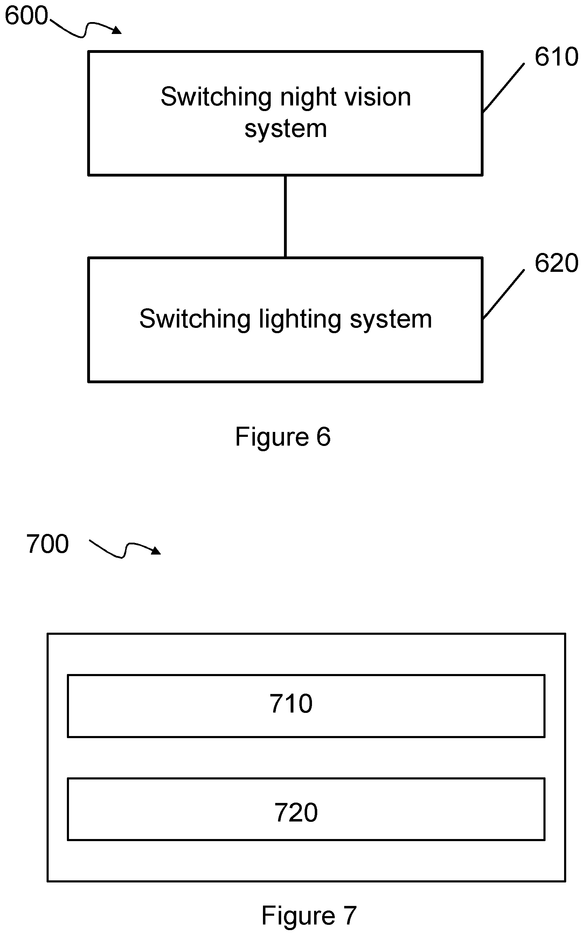

Figure 6 illustrates a switching method 600 according to some examples. The switching method 600 comprises switching a night vision device at a first period and first duty cycle 610 and switching a lighting system in the vicinity of the night vision device at a second period equal to a multiple of the first period and at a second duty cycle 620. The multiple may be an integer multiple. The night vision device and lighting system are synchronised such that the lighting system is inactive at the time when the night vision device is active. Figure 6 illustrates the method using a flow chart, however it is to be understood that the method may be carried out in any order, and is not limited to being sequential. In some examples the method may further comprise changing the night vision device switching to match the switching of the lighting system. In some examples the method may further comprise detecting the switching frequency of the lighting system.

In some examples the first period T₁ may be approximately equal to 10 ms and the first duty cycle may be approximately equal to 90%, such that the night vision device is inactive for approximately 1 ms and active for approximately 9 ms.

In some examples the second period T₂ may be approximately equal to the first period. In some examples the second period T₂ may be approximately equal to 10 ms and the first duty cycle may be approximately equal to 10%, such that the lighting system is inactive for approximately 9 ms and active for approximately 1 ms.

In some examples the night vision device may be located in a vehicle. In some examples the night vision device may be located in an aircraft, such as an in a cockpit of an aircraft.

Figure 7 illustrates a computer readable medium 700. The computer readable medium 700 may comprise night vision device switching module 710 and lighting system switching module 720. Night vision device switching module 710 may comprise instructions that when executed by a processing means cause a night vision device to be switched at a first period and first duty cycle. Lighting system switching module 720 may comprise instructions that when executed by a processing means cause a lighting system to be switched at a second period and second duty cycle. The night vision device switching module 710 and lighting system switching module 720 may synchronise the switching such that the lighting system is inactive at the time when the night vision device is active.

As used throughout the description the lighting system being inactive or off may refer to emission status of the lighting system. When the lighting system is inactive the lighting system may be emitting substantially no light or may be emitting a lower level of light compared to the active state.

As used throughout the description the night vision device may be inactive or off such that at least one of the light sensors associated with the night vision device does not detect input light. The night vision device may be also be inactive if it does not present an image to the user. In some examples the night vision may still present an image to the user when it is inactive, for example it may duplicate the last image prior to it being switched to an inactive state.

The description and claims describe night vision devices, however it should be understood that the techniques described are equally applicable to other systems such as thermal imaging systems or any other system that detects non-visible light in order to present an image to a user, for example an ultraviolet light imaging system.

## Claims

1. A system comprising:
a night vision device; and
switching circuitry configured to switch the night vision device at a first period and first duty cycle to synchronise the switching of the night vision device with a second period of a lighting system in the vicinity of the night vision device, wherein the night vision device and lighting system are configured to be synchronised such that the lighting system is inactive at the time when the night vision device is active.

2. The system according to claim 1, wherein the first duty cycle is approximately 90% and the second duty cycle is approximately 10%.

3. The system according to any of claims 1 and 2, wherein the first period is 10 ms.

4. The system according to any preceding claim wherein the second period is substantially equal to first period.

5. The system according to any preceding claim wherein the night vision device comprises at least one of a night vision camera, night vision eyepiece and/or night vision googles.

6. The system according to any preceding claim, wherein the night vision device comprises a short wave infra red camera.

7. A vehicle comprising the system according to any of claims 1 to 6.

8. The vehicle according to claim 7, wherein the vehicle is an aircraft.

9. The vehicle according to claim 8, wherein the lighting system is to illuminate a cockpit of the aircraft.

10. A method comprising:
switching a night vision device at a first period and first duty cycle; and
switching a lighting system in the vicinity of the night vision device at a second period equal to a multiple of the first period and at a second duty cycle;
wherein the night vision device and lighting system are synchronised such that the lighting system is inactive at the time when the night vision device is active.

11. The method according to claim 10, wherein the first duty cycle is approximately 90% and the second duty cycle is approximately 10%.

12. The method according to any of claims 10 and 11, wherein the first period is 10 ms.

13. The method according to any of claims 10 to 12 wherein the second period is substantially equal to first period.

14. The method according to any of claims 10 to 13, wherein the night vision device comprises at least one of a night vision camera, night vision eyepiece and/or night vision googles.

15. A computer readable medium comprising instructions that cause a processor to perform the method of any of claims 10-14.
